Europäisches Patentamt

European Patent Office

Office européen des brevets

(11) Numéro de publication: **0 088 680**
**B1**

(12) **FASCICULE DE BREVET EUROPEEN**

(45) Date de publication du fascicule du brevet:
**10.01.90**

(21) Numéro de dépôt: **83400419.4**

(22) Date de dépôt: **01.03.83**

(51) Int. Cl.⁴: **B 23 Q 7/14,** B 65 G 35/06

(54) **Perfectionnements aux machines pour l'assemblage ou l'usinage de pièces.**

(30) Priorité: **05.03.82 FR 8203757**

(43) Date de publication de la demande:
**14.09.83 Bulletin 83/37**

(45) Mention de la délivrance du brevet:
**10.01.90 Bulletin 90/2**

(84) Etats contractants désignés:
**AT BE CH DE GB IT LI LU NL SE**

(56) Documents cités:
**EP-A- 0 050 080**
**AT-B- 320 523**
**DE-A- 2 644 136**
**DE-A- 2 752 268**
**GB-A- 2 040 244**
**US-A- 3 931 882**
**US-A- 4 014 428**

(73) Titulaire: **Prodel, Jacques, 120 rue de Cuts Carlepont,
F-60170 Ribecourt (FR)**

(72) Inventeur: **Prodel, Maurice, Route de Vic sur Aisne
Carlepont, F-60170 Ribecourt (FR)**
Inventeur: **Prodel, Jacques, 120, rue de Cuts Carlepont,
F-60170 Ribecourt (FR)**

(74) Mandataire: **Netter, André et al, Cabinet NETTER 40, rue
Vignon, F-75009 Paris (FR)**

ACTORUM AG

## Description

L'invention a pour objet des perfectionnements aux machines pour l'assemblage et/ou l'usinage de pièces.

Dans ces machines, on a proposé d'entraîner des supports de pièces ou palettes suivant un ou des parcours constitués par une succession de trajets rectilignes, perpendiculaires l'un à l'autre, en faisant appel à une courroie coopérant avec le plateau porte-pièce que comprend la palette.

Le document EP-A-0 050 080, publié le 21.4.82 au nom des Demandeurs, décrit une installation de transport horizontal de pièces pour assurer la circulation de ces pièces parmi des postes d'assemblage et/ou d'usinage soit manuel soit automatique, installation constituée de palettes porte-pièces et d'une suite de modules assurant le transport en continu des palettes suivant un parcours composé par des trajets successifs horizontaux perpendiculaires entre eux grâce à des courroies sur lesquelles reposent les palettes, installation dans laquelle l'entraînement des palettes par les courroies est réalisé par frottement sur au moins une marge des palettes portée sur un brin de la courroie pendant que la marge opposée peut glisser, le cas échéant, le long de moyens de guidage et dans laquelle au moins un des modules comprend plusieurs trajets mutuellement perpendiculaires.

Dans un but de simplification, on a proposé, pour cette machine à plusieurs modules, propre à constituer un atelier flexible, de prévoir, pour chaque module constitutif de la machine un seul moteur électrique pour l'entraînement de la ou des palettes présentes dans un module. La disposition des trajets des palettes dans un module, quelquefois leur diversité, amènent, dans de nombreux cas, à faire appel à une courroie de grande longueur, fréquemment à parcours compliqué et soumise à des efforts mécaniques relativement élevés. La courroie doit être alors en un matériau propre à résister à de tels efforts sans qu'il en résulte un allongement excessif.

La présente invention s'adresse à pallier ces inconvénients par le fait que sont prévues, dans un module, autant de courroies d'entraînement à frottement qu'il y a de trajets perpendiculaires, chacune des courroies d'entraînement à frottement étant disposée suivant un circuit fermé à deux brins parallèles défini par deux poulies d'extrémité à axe vertical, des circuits perpendiculaires étant situés à deux niveaux différents et l'entraînement des multiples courroies d'un module étant assuré à partir d'un moteur électrique unique, des poulies à plusieurs gorges assurant, si besoin est, la transmission du mouvement d'une courroie à une courroie successive.

On peut alors utiliser des courroies disponibles dans le commerce et bon marché.

Dans une forme de réalisation, lorsque les circuits perpendiculaires sont successifs, ils comprennent une même poulie pour leur définition, une palette présentant sur sa face inférieure des zones d'entraînement à deux niveaux différents, les zones d'un niveau étant dirigées perpendiculairement aux zones de l'autre niveau.

Une réalisation préférée prévoit également de conformer la face inférieure d'une palette de manière à pouvoir coopérer avec les courroies suivant trois niveaux déterminés, un des niveaux des courroies correspondant à l'entraînement dans le sens longitudinal, c'est-à-dire parallèlement à la face avant de la machine, l'autre niveau à l'entraînement dans le sens perpendiculaire ou transversal, et un troisième niveau étant prévu pour faciliter le passage d'un entraînement dans une direction à un entraînement dans la direction perpendiculaire par un entraînement transitoire, par exemple transversal.

Dans une réalisation préférée, l'application, pour assurer le support et la mobilité des palettes, de billes de roulement ou de manutention, en soi connues, permet la progression sur au moins une piste prévue sur le fond du module.

La réduction complémentaire d'effort d'entraînement requis qui en résulte diminue d'autant la fatigue supportée par une courroie, au bénéfice de sa longévité.

L'utilisation est également prévue de courroies à section circulaire, en un matériau habituel pour les courroies.

Avantageusement, une telle courroie coopère avec une zone bandulaire à stries sur la face inférieure de la palette.

L'invention concerne en outre selon la revendication 19 une palette porte-pièces propre à circuler dans une telle installation, cette palette étant du type à plateau, patins transversaux et plots faisant saillie vers le bas par rapport aux patins, aux extrémités de ceux-ci, la palette comprenant, sur sa face inférieure, des zones d'entraînement principal à deux niveaux différents, les zones d'un niveau étant dirigées perpendiculairement aux zones de l'autre niveau, et les plots présentant des zones bandulaires d'entraînement transversal supplémentaire pourvues d'une surface rugueuse et situées à un troisième niveau inférieur aux deux niveaux principaux.

Les billes de manutention sont logées dans les plots.

On prévoit également d'utiliser des parties striées dans un but d'identification ou de localisation de palettes en formant des stries sur une bande métallique rapportée sur la face inférieure d'un patin en matière plastique et en prévoyant des bandes striées en métal de longueur différentes pour un côté et le côté opposé d'une palette.

Dans la description qui suit, faite à titre d'exemple, on se réfère aux dessins annexés, dans lesquels:

- la figure 1 est une vue schématique en plan d'un module de retour rapide et d'un module perpendiculaire ou transversal;

- la figure 2 est une vue en coupe suivant la ligne II–II de la figure 1, mais à plus grande échelle;

- la figure 3 est une vue du dessous d'une palette porte-pièces;

– la figure 4 est une vue en plan d'une partie du second module de la figure 1, mais à plus grande échelle;

– la figure 5 est une vue en coupe suivant la ligne V–V de la figure 4;

– la figure 6 est une vue en coupe suivant la ligne VI–VI de la figure 4;

– la figure 7 est une vue schématique en plan d'un module d'assemblage manuel;

– la figure 8 est une vue à plus grande échelle en plan d'une partie du module de la figure 7;

– la figure 9 est une vue analogue à la figure 8, mais pour une autre condition;

– la figure 10 est une vue en coupe suivant la ligne X–X de la figure 7;

– la figure 11 est une vue analogue à la figure 8, mais montrant un vérin d'actionnement;

– la figure 12 est une vue en coupe verticale d'un module à poste automatique;

– la figure 13 est une vue d'une partie de ce module, pour une autre condition d'un tiroir d'introduction;

– la figure 14 est une vue schématique perspective dudit module, certains organes ayant été enlevés;

– la figure 15 est une vue schématique en coupe de deux poutres à rainures.

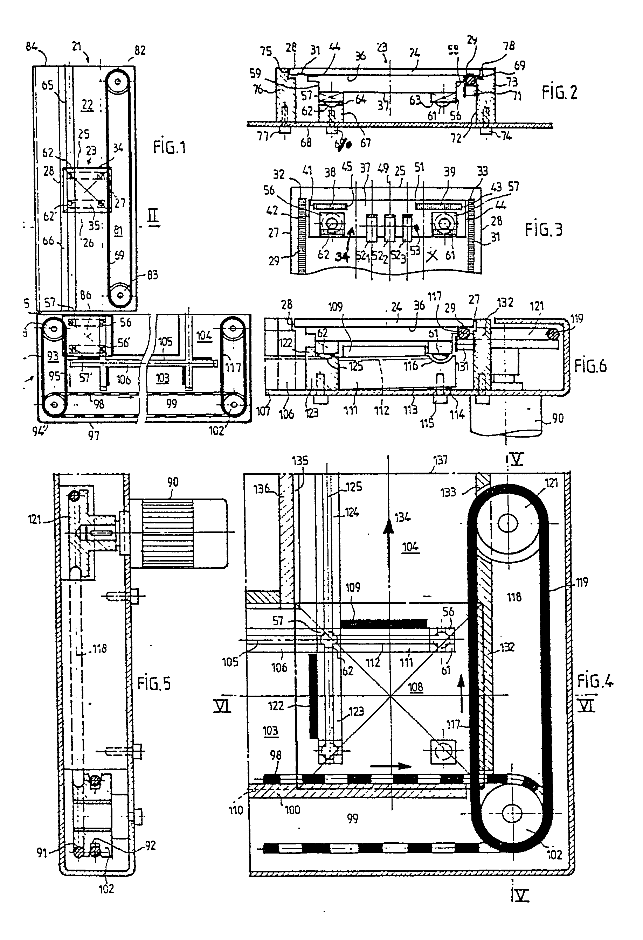

Le module de retour rapide 21 (figure 1) ménage une voie 22 pour le déplacement d'une palette porte-pièce 23. La palette 23 comprend une plaque ou corps de palette 24 (figure 2) à configuration rectangulaire, par exemple carrée, limitée par un bord amont 25 (ou de droite comme vu par un observateur placé à l'avant de la machine), un bord aval ou de gauche 26, un bord avant 27 et un bord arrière 28. Sur la face inférieure 29 de la plaque 24, près des bords 27 et 28, des stries transversales ont été formées suivant deux bandes longitudinales 29 et 31 (fig. 3) dont les extrémités, comme montré en 32 et 33, sont distantes des bords transversaux, ici le bord 25. Deux patins transversaux 34 et 35, de forme générale parallélépipédique, font saillie vers le bas par rapport à la face inférieure 36 de la plaque 24.

Sur la face inférieure 37 de chaque patin, par exemple le patin 34, sont présentes des stries métalliques formant des bandes transversales 38 et 39, de longueurs inégales, l'extrémité avant 41 de la bande 38 étant proche de la face verticale antérieure 42 du patin 34 et l'extrémité arrière 43 de la bande 39 proche de la face verticale 44 dudit patin, mais l'extrémité opposée 45 de la bande 38 est plus distante du plan longitudinal moyen 49 de la palette que l'extrémité 51 de la bande 39. Les bandes striées sur les patins sont à symétrie diagonale, c'est-à-dire que les bandes de même longueur sont adjacentes à des angles diagonalement opposés de la palette. On peut ainsi distinguer l'un des bords de la palette du bord opposé et on tire parti de cette disposition pour la commande automatique du déplacement des palettes par coopération avec des capteurs que présente le fond des modules.

Chaque patin loge, dans sa partie centrale, trois sabots longitudinaux ou touches $52_1$, $52_2$, $52_3$ montés indépendamment à rotation autour d'un même axe transversal 53 et dont la face inférieure présente un biseau, chacun des sabots pouvant prendre deux positions, l'une dans laquelle son extrémité en biseau fait saillie par rapport à la face inférieure 37 du patin et l'autre dans laquelle aucune partie du sabot ne fait saillie par rapport à ladite face inférieure.

Vers ses extrémités, chaque patin présente deux plots 56, 57, à contour rectangulaire, qui logent des billes de roulement ou billes de manutention respectivement 61, 62 faisant saillie par rapport aux faces inférieures 63, 64 des plots. De telles billes, bien connues en soi et fabriquées par exemple par SKF, ont une partie non visible placée dans un logement, l'intervalle entre la bille et la paroi du logement étant empli de très petites billes, de sorte que la rotation de la bille autour de son centre se fait pratiquement sans frottement.

La palette 23 repose par l'intermédiaire des billes 62, 62' de ses patins 34, 35, dans un chemin de roulement 65 ménagé sur la face supérieure 66 d'une barre 67 fixée sur le fond 68 du module 21 par des vis 60. L'entraînement de la palette 23 se fait par coopération de sa bande moletée ou striée 29 avec une courroie 69 à section transversale circulaire reposant sur des rouleaux 71 faisant saillie par rapport à la face interne 72 d'un rail antérieur 73 fixé sur le fond 68 du module 21 par des vis 74. C'est le poids de la palette 23 qui assure le contact de pression entre la bande striée 29 et la courroie 69 permettant l'entraînement. Le bord opposé 28 de la palette peut coopérer avec un redent 75 que présente la partie supérieure d'un rail postérieur 76 fixé sur le fond 68 par des vis 77. Le rail antérieur 73 présente également un redent 78 duquel le bord interne de la palette est en regard.

Le brin 69 fait partie d'une courroie 81 disposée suivant un circuit fermé par son engagement dans les gorges respectives de poulies 82 et 83 à axe vertical prévues à l'extrémité antérieure droite 84 et à l'extrémité antérieure gauche 85 du module 21.

La voie 22 du module 21 se prolonge par une voie 86 d'un module 87 dirigé d'une manière générale perpendiculairement au module 21. Le module 87 présente à la partie postérieure de son entrée une poulie 88 à axe vertical sur laquelle passe une courroie 93 disposée suivant un circuit fermé à deux brins parallèles 94 et 95 dont la longueur est substantiellement égale à la largeur du module 87, ledit circuit fermé étant défini par une seconde poulie 94' à axe vertical à deux gorges. Avant que l'extrémité de droite de la palette (comme considérée par un observateur se trouvant à l'avant de la machine dont font partie les modules 21 et 87), quitte le brin 69 de la courroie 81, son extrémité de gauche a, par le bord inférieur de son bord postérieur, pris contact avec le brin 95 de la courroie 93, situé au même niveau que le brin 69, de sorte que l'entraînement de la palette se poursuit sans discontinuité.

Lorsque la palette 23 parvient à proximité de la paroi latérale 97 du module 87, elle est entraînée suivant un mouvement perpendiculaire au mouvement qu'elle avait jusqu'alors et cela par le brin 98 d'une courroie 99 disposée suivant un circuit fermé horizontal défini d'une part par la gorge inférieure de la poulie 94′ et à son autre extrémité par passage dans la gorge inférieure d'une poulie à deux gorges 102, les conditions dans lesquelles se passe le changement de direction d'entraînement de la palette étant explicitées ci-après pour le changement de direction de la palette qui se produit à l'aval lorsque la palette passe de la voie 103, perpendiculaire à la voie 86, à la voie 104 du module 87, perpendiculaire à la voie 103, donc longitudinale.

Dans la voie 103, l'entraînement de la palette par le brin 98 de la courroie 99 se fait par coopération dudit brin avec les bandes striées 39′ et 38′ du patin 35 de ladite palette proches du bord 26 de celle-ci. La palette est supportée par le chemin de roulement 105 que présente une barre 106, transversale, fixée sur le fond 107 du module 87 et avec lequel coopèrent les billes 61, 62 de l'extrémité de droite de la palette.

Lorsque la palette aborde le carrefour 108 entre les voies 103 et 104, au guidage de son mouvement contribue un aileron 109 que présente, en saillie vers le haut, une barre 111 prolongeant la barre 106 et qui coopère avec la patin 34 de la palette. Ladite barre, qui présente sur sa face supérieure un chemin de roulement 112 prolongeant le chemin de roulement 105, a une pente légèrement ascendante grâce à l'interposition, entre sa face inférieure 113 (figure 6) et le fond 107 du module, d'une rondelle 114 maintenue par une vis 115. La barre 111 présente à son extrémité une dénivellation ou gouttière 116 dans laquelle aboutit le chemin de roulement 112.

Lorsqu'elle parvient au carrefour 108, sous l'effet d'entraînement du brin 98 de la courroie 99, le bord de droite 25 de la palette est légèrement soulevé par rapport à son bord de gauche, en raison de la pente ascendante du chemin de roulement 112, le bord de gauche 26 de la palette restant guidé dans le redent 110 que présente le rail transversal 100: la face inférieure du plateau 24, en extrémité de course, avant que la bille 61 parvienne à la dénivellation 116, surplombe un brin de courroie 117, au même niveau que le brin de courroie 95; lorsque la bille 61 tombe dans la dénivellation 116, la bande striée 29 vient en contact par un mouvement vertical, sous l'effet de la gravité, avec le brin de courroie 117 sans que le bord 27 de la palette ait heurté ledit brin. Le passage de l'entraînement dans le sens tranversal, par coopération avec des bandes striées des patins, à un entraînement dans le sens longitudinal, par coopération avec des bandes striées perpendiculaires de la plaque, se fait donc dans les meilleures conditions.

Le brin de courroie 117 fait partie d'une courroie 118 comprenant un second brin parallèle 119, la courroie étant disposée suivant un circuit fermé entre, d'une part, la poulie à axe vertical 102 à deux gorges 91, 92, la gorge inférieure 92 recevant la courroie 99 et la gorge supérieure 91 recevant la courroie 118, et, d'autre part, une poulie 121, à une gorge, laquelle est calée sur l'arbre d'un moteur électrique 90.

L'entraînement de la palette se fait alors suivant la voie 104 et au guidage de la palette pendant ce parcours sur le carrefour 108 contribue un aileron 122 faisant partie d'une barre 123 érigée sur le fond 107 et que prolonge une barre 124, la barre 123 et la barre 124 présentant sur leur face supérieure le chemin de roulement 125 avec lequel coopèrent les billes 62 et 62′ portées par les plots 57 et 57′ de la palette. Le brin de courroie 117 est supporté par les rouleaux 131 montés sur le rail 132, lequel présente une traversée 133 pour le passage de la courroie 118. Le contact de la face inférieure 36 du plateau de la palette le long de la bande striée 29, avec le brin 117 assure, sous l'effet du poids de la palette, et éventuellement de la pièce qu'elle porte, l'entraînement de ladite palette dans le sens marqué par la flèche 134, le bord opposé de la palette coopérant avec le redent 135 du rail 136.

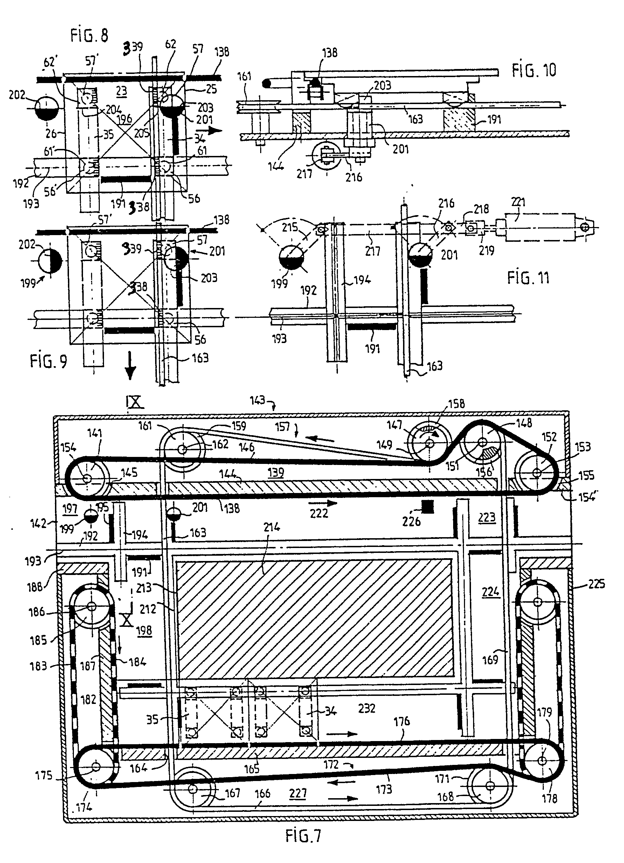

A la sortie 137 du module 87, la palette est, pendant un court instant, entraînée, par sa partie amont ou de gauche, par le brin de courroie 117, tandis que sa partie de droite ou aval est en contact d'entraînement avec un brin de courroie 138 (figure 7) au même niveau que le brin 117, et qui fait partie d'une courroie 139 disposée suivant un circuit fermé défini notamment par une poulie 141 proche de l'entrée 142 du module 143 prévu pour l'assemblage manuel de pièces. La courroie 139 traverse le rail longitudinal 144 portant les rouleaux supportant le brin 138 par une ouverture 145 prévue dans ledit rail. L'autre brin 146 de la courroie 139 est guidé dans la gorge d'une poulie 147, calée sur l'arbre d'un moteur électrique, en abordant celle-ci par sa partie antérieure; la courroie passe sur une autre poulie 148 qu'elle aborde par sa partie postérieure, le plan des axes 149 et 151 des poulies étant parallèle à la direction longitudinale. La courroie passe ainsi sur une poulie 152 dont l'axe 153 est dans le plan longitudinal passant par l'axe 154 de la poulie 141, et la courroie se raccorde au brin avant 138, après avoir traversé un rail 154 prolongeant le rail 144 par une ouverture 155.

La poulie 148 est une poulie à deux gorges, la gorge inférieure 156 guidant une courroie 157, disposée suivant un circuit fermé, et à un niveau qui est inférieur au niveau de la courroie 139 et inférieur également à celui de la courroie 99 que comprend le module 87. La courroie 157 passe ensuite, dans le sens de sa circulation – alors que la description ci-dessus du circuit de la courroie 139 a été faite en sens contraire de la circulation de cette dernière – dans une seconde gorge 158 de la poulie 147 puis dans la gorge 159 d'une poulie 161 dont l'axe 162 est dans le même plan vertical que les axes 149 et 151. La courroie 157 comprend un brin 163 situé dans un plan transversal et qui, à son extrémité, traverse par une ouverture 164 un rail antérieur 165, après quoi la courroie 157 se prolonge par un brin 166, longitudinal, après passage sur une poulie 167 puis, après passage dans la gorge inférieure d'une poulie 168, à double gorge, par un brin 169, à nouveau transversal, par lequel elle regagne la poulie 148.

La gorge supérieure 171 de la poulie 168 sert au guidage d'une courroie 172 disposée suivant un circuit comprenant un brin antérieur 173 qui, par passage sur une poulie 174 à axe 175, se raccorde à un brin longitudinal 176 reposant sur des rouleaux portés par le rail longitudinal 165. Le circuit fermé de la courroie 172 est complémentairement défini par une poulie 178 dont l'axe 179 est dans le plan longitudinal passant par l'axe 175 de la poulie 174. La courroie 172 est dans le même plan horizontal supérieur que la courroie 139 qui est également celui de la courroie 118, de la courroie 93 et de la courroie 81, ce qui a été symbolisé sur les dessins par le poché adopté pour représenter lesdites courroies.

La poulie 174 est une poulie à deux gorges et dans la gorge inférieure de ladite poulie passe une courroie 182 à deux brins horizontaux 183 et 184, disposée en circuit fermé grâce à une poulie 185 montée à rotation autour d'un axe 186 dans le même plan transversal que l'axe 175. La courroie 182 est à un niveau intermédiaire, qui est celui de la courroie 99, comme schématisé par le poché interrompu adopté pour représenter lesdites courroies.

La courroie 182 est supportée par son brin 184 par des rouleaux que porte un rail transversal 187. Celui-ci se raccorde à un rail longitudinal 188, lequel est dans le prolongement du rail 132 du module 87.

La figure 8 montre une palette porte-pièce 23 ayant quitté le module 87 en étant entraîné par le brin 117 de courroie et ayant pénétré dans le module 143 entraînée par le brin 138 de la courroie 139. Au guidage de la palette 23 contribue un aileron 191 (figure 8) que présente la barre 192 à chemin de roulement 193 et dont est solidaire une barrette 194, perpendiculaire, présentant également un aileron 195 (figure 7).

Le carrefour 196 entre la voie d'entrée 197 et la voie transversale 198 est équipée de deux goujons verticaux 199, 201, cylindriques, montés à rotation autour de leur axe et dont les parties supérieures présentent des échancrures définissant des plans verticaux diamétraux 202 et 203. Dans la condition montrée sur la figure 8, lesdits plans verticaux 202 et 203 sont alignés longitudinalement. La palette 23 est entraînée par le brin de courroie 138, roule par ses billes antérieures sur le chemin de roulement 193, est guidée par coopération de la face longitudinale 205 de son plot postérieur de droite 57 avec la face de butée 202, puis par coopération de la face verticale antérieure de droite 205′ contre l'aileron 211. Avant d'arriver au centre du carrefour, le bord de droite 25 de la palette est soulevé, comme expliqué ci-dessus en référence à la figure 6, puis la palette retombe par gravité de manière que les faces inférieures des plots 56 et 57 retombent sur le brin de courroie 163 mais la palette n'est pas entraînée par celle-ci en raison de la coopération par butée positive de la face 105 du plot avec la face de butée 203, de sorte que la palette poursuit son mouvement longitudinal, le guidage étant assuré par coopération du plot 56′ avec l'aileron 191.

Par contre, dans la condition montrée sur la figure 9, en laquelle les goujons 199 et 201 ont leurs plans verticaux 202 et 203 dirigés transversalement, la rotation desdits goujons ayant lieu après passage de l'un et l'autre des plots 57 et 57′ devant le goujon 199, le plot 57 vient heurter la face verticale 203, ce qui empêche la poursuite de l'entraînement par le brin 138 de la courroie située au niveau supérieur et, par contre, permet, après basculement et retombée, l'entraînement de la palette par le brin transversal 163 situé au niveau inférieur et qui coopère avec des bandes striées 338 et 339 sur la face inférieure des plots 56 et 57. Au début du mouvement, l'aileron 195 contribue au guidage de la palette dans son mouvement transversal. La courroie 157 exerce une action d'entraînement suivant seulement une très faible course pendant le court intervalle existant entre l'entraînement longitudinal et l'entraînement transversal assumés par la courroie 182. Elle a ainsi un rôle transitoire pour assurer le passage du carrefour. Après cette faible course transversale, la bande striée 38′ du patin 35 prend contact avec le brin 184 de la courroie 182, au niveau intermédiaire, qui assure l'entraînement de la palette, celle-ci étant guidée par son bord opposé dans l'échancrure 212 ménagée dans le bord 213 du bloc rectangulaire 214.

Dans la condition montrée sur la figure 9, le goujon 199 s'oppose par son plan de butée verticale 202 à l'arrivée d'autres palettes au carrefour 196.

Pour leur actionnement, les goujons 199 et 201 sont solidaires de queues ou manivelles 215 et 216 qui sont attelées sur une bielle 217 dont l'extrémité 218 est reliée à l'organe mobile 219 d'un vérin 221.

L'invention prévoit un moletage sur les faces d'extrémités longitudinales des patins dans leur partie adjacente à la face inférieure du plateau et qui, par coopération avec un brin de courroie situé au niveau supérieur, contribuent à l'entraînement de la palette.

Lorsqu'une palette circule dans la voie longitudinale 222 prolongeant la voie d'entrée 197 du module 143, sous l'effet d'entraînement du brin de courroie 138, et qu'elle parvient au carrefour 223 avec la voie transversale 224 parallèle à la voie 198 mais adjacente à la paroi transversale de droite 225, l'effet du brin 169 de la courroie 157 qui s'exerce contre la bande striée 339 que présente la face inférieure du plot 57 a pour effet d'appliquer la tranche striée du patin contre la courroie 138, ce qui accroît l'effet d'entraînement de cette dernière sur la palette.

Une butée éclipsable 226 est prévue à la sortie de la voie 222 et qui vient en position opératoire lorsque l'ouvrière souhaite évacuer une ou plusieurs palettes de la voie longitudinale d'assemblage 227. On a ainsi la certitude que l'évacuation des palettes portant une pièce traitée dans le poste ne sera pas perturbée par la circulation de palettes circulant dans la voie 222. La poussée qu'exercent dans la voie 224, sur la palette parvenant au carrefour 223, les palettes qui suivent celle-ci ne peut qu'être favorable à l'entraînement de ladite palette aval par le brin 138.

Dans chacun des modules, les courroies sont disposées suivant des circuits fermés de faible longueur. Chaque courroie a à assumer l'entraînement d'une palette ou d'un petit nombre de palettes. La résistance à l'avancement d'une palette est très faible en raison de son support par l'intermédiaire de billes. Chaque courroie est donc soumise à un effort de traction relativement petit. Elle peut être en un matériau habituel pour les courroies et assumer un service prolongé. Elle est avantageusement à section transversale circulaire.

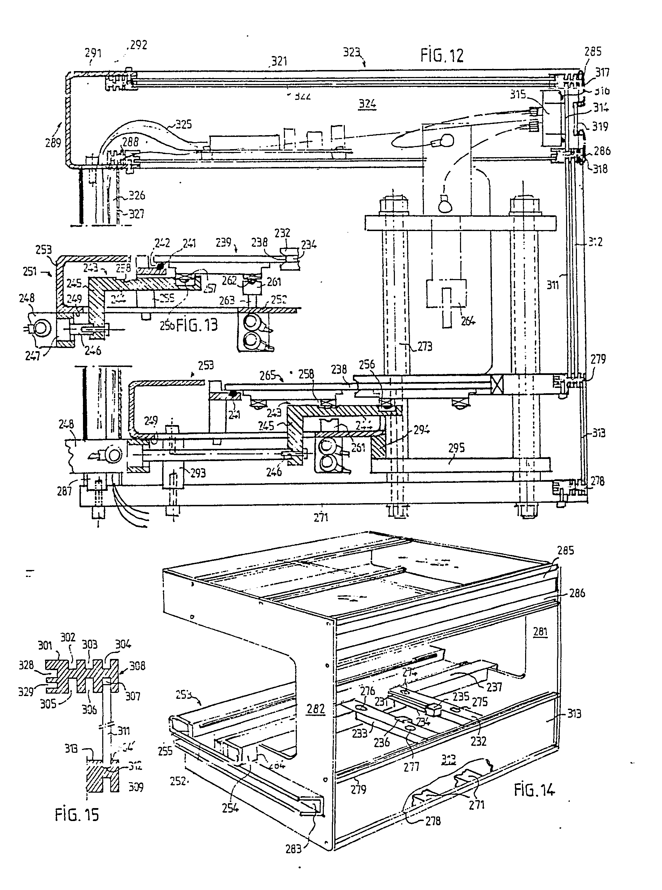

On se réfère maintenant aux figures 12 à 14 relatives à un poste de traitement automatique constituant un des modules de la machine. Ledit poste comporte un guichet 231 défini par deux traverses 232, 233 ménageant des coulisseaux 234 en regard l'un de l'autre pour l'introduction et la réception d'une palette, le mouvement vers l'avant de la palette étant limité par deux blocs de butée 235 et 236. L'extrémité d'un rail longitudinal 237 de roulement des palettes est fixé à la traverse 232 et il y circule le bord antérieur 238 des palettes 239. Celles-ci sont entraînées par une courroie 241 à section circulaire qui coopère avec la bande striée longitudinale inférieure 242 adjacente au bord postérieur de la palette. En regard du guichet 231, et à un niveau inférieur à celui-ci, est disposé un tiroir 243 en forme de L, à deux branches, à savoir une branche horizontale 244 et une branche verticale 245. La branche verticale 245 est fixée à l'extrémité 246 de l'organe mobile 247 d'un vérin dont le corps 248 est fixé à la face inférieure 249 d'un profilé 251 en forme générale de omega avec un fond 252 de grande largeur se terminant par une rive longitudinale postérieure 253 et une rive longitudinale antérieure 254, l'une et l'autre en forme d'U. Un rail 255 supportant la courroie 241 est à l'avant de la rive postérieure 253 et il est ajouré pour permettre le passage de la branche horizontale 244 du tiroir 243. Ladite branche présente à sa partie antérieure une rainure à section rectangulaire 256 propre à recevoir les plots postérieurs 257 de la palette 239. Près de son attache à la branche verticale 245, la branche horizontale 244 présente un chemin de roulement 258.

La figure 13 montre une palette qui, sous l'effet d'entraînement de la courroie 241, est parvenue face au guichet 231.

Dans la dernière partie de son parcours, elle est soutenue par un dé 261 présentant un chemin de roulement 262 qui coopère avec les billes des plots antérieurs de la palette et qui est porté par une tige verticale 263, éclipsable.

La palette étant parvenue en face du guichet 231, le vérin 248 est actionné. Les bords transversaux de la palette s'introduisent dans les coulisseaux 234, le bloc 261 étant alors éclipsé. La position de fin d'introduction est montrée sur la figure 12, le bord antérieur de la palette étant alors en butée contre les blocs 235 et 236. La palette, et la pièce qu'elle porte sont alors en position pour que la pièce soit traitée par un outil qu'on a schématisé en 264. Dans cette position du tiroir 231, le chemin 256 du tiroir 243 prolonge le chemin ménagé par le rail longitudinal antérieur 237 du module de sorte qu'une palette arrivante 265 peut poursuivre son chemin au droit du guichet entraînée par la courroie 241, le dé 261 étant alors éclipsé.

Le poste automatique comprend, comme éléments d'ossature, au droit des traverses 232 et 233, deux poutres transversales inférieures 271. C'est sur ces poutres transversales que sont assemblées, par boulonnage, les colonnes 273 traversant les traverses 232 et 233 par des trous 274, 275, 276, 277 que présentent celles-ci. Sur les poutres transversales 271 est fixée une poutre à rainures longitudinale inférieure 278 et sur les traverses 232 et 233, à l'extrémité avant de celles-ci, une poutre à rainures longitudinale 279, ainsi à hauteur du guichet 231 et régnant sur toute la largeur du module. Les poutres 278 et 279 servent à la fixation, à leurs extrémités, de deux joues 281 et 282 constituées chacune par une tôle en forme de C. Sur les joues 281, 282, vers la partie inférieure de celles-ci, sont fixés des fers en U dont l'un est visible en 283. Ce sont ces fers en U qui servent à l'enfichage du module sur les éléments de structure de la machine, à la manière 284 d'un tiroir. La branche inférieure de chaque U présente une encoche pour laisser passage au convoyeur constitué par le profilé en omega et dont les extrémités sont fixées sur les fers en U 283.

Entre les joues 281 et 282 sont interposées des poutres à rainures antérieures respectivement de sommet 285 et supérieure 286. A l'extrémité postérieure des poutres transversales 271 sont fixés, par boulonnage, des poteaux 287. A l'extrémité supérieure desdits poteaux est fixée une poutre à rainures longitudinale 288 ainsi qu'une tôle postéro-supérieure 289, à section en forme d'U, dont la branche supérieure 291 sert à la fixation d'une sixième poutre à rainures 292.

La solidarisation du convoyeur 253 a lieu par l'intermédiaire de potelets 293 fixés à leur partie inférieure sur les poutres transversales 271. A la fixation du convoyeur contribue également une poutre longitudinale 294 prenant appui sur un cadre 295 traversé par les colonnes 273.

Une poutre à rainures a la section montrée sur la figure 15. Elle est à contour général rectangulaire et présente sur une de ses grandes faces longitudinales 301 des rainures, au nombre de trois dans l'exemple représenté 302, 303, 304 et sur la face opposée, des rainures de même nombre mais de plus grande profondeur 305, 306, 307. L'association de deux telles poutres à rainures 308, 309 permet le montage de plaques 311 et leur maintien.

En présentant une plaque 311 avec son bord inférieur 312 au niveau de la face supérieure 313 de la poutre à rainure inférieure 309, il est possible d'engager ladite plaque dans la rainure 307 de la poutre à rainures supérieure 308. La plaque retombe ensuite, sous l'action de son propre poids, dans la rainure 304′ de la poutre à rainures inférieure 309 pour aboutir à la condition montrée sur la figure 15.

Les plaques engagées peuvent être, suivant le cas, des tôles ou bien des plaques transparentes comme en «plexiglas». Entre les poutres à rainures antérieures 279 et 286 on a ainsi mis en place deux vitres 311 et 312. Ces vitres peuvent coulisser horizontalement, ce qui permet l'accès à la partie du module observé et également de réaliser la continuité de la séparation entre l'intérieur du module et l'extérieur du module.

Entre la poutre à rainures inférieure 278 et la poutre à rainures 279 est montée une tôle 313 interdisant dans les conditions habituelles l'accès au personnel de l'espace situé en dessous du guichet 231.

Entre la poutre à rainures antéro-supérieure 285 et la poutre immédiatement inférieure 286 a été montée une plaque d'acier 314 qui porte une batterie d'électro-distributeurs 315 avec des boutons d'actionnement montrés en 316. Ces boutons sont accessibles de l'extérieur mais protégés par des bandeaux 317 et 318 de matière plastique montés de manière amovible par clipsage sur les poutres à rainures respectivement 285 et 286. Lesdites poutres servent également au montage amovible d'une plaque transparente 319.

La poutre à rainures 285 et la poutre à rainures postéro-supérieure 292 servent, par leurs rainures 328, 329, au montage de deux plaques transparentes 321 et 322 qui constituent le plafond 323 d'un boîtier ou carter 324 logeant des dispositifs électro-pneumatiques. Des conducteurs ou conduits électriques ou pneumatiques 325 protégés dans le boîtier 324 se prolongent dans des fourreaux 326 à paroi 327 entourant les poteaux 287.

Une telle organisation d'une part assure au personnel la sécurité maximale, d'autre part, permet à l'utilisateur d'adapter le module à l'utilisation précise qu'il souhaite, également assure au personnel la visibilité permettant le contrôle à tout instant du bon fonctionnement du module.

**Revendications**

1. Installation de transport horizontal de pièces pour assurer la circulation de ces pièces parmi des postes d'assemblage et/ou d'usinage soit manuel soit automatique, installation constituée de palettes porte-pièces (23) et d'une suite de modules (21, 87, 143) assurant le transport en continu des palettes suivant un parcours composé par des trajets successifs horizontaux perpendiculaires entre eux grâce à des courroies (93, 99, 118) sur lesquelles reposent les palettes (23), installation dans laquelle l'entraînement des palettes (23) par les courroies (93, 99, 118) est réalisé par frottement sur au moins une marge (27) des palettes portée sur un brin de la courroie pendant que la marge opposée (28) peut glisser le cas échéant le long de moyens de guidage (76) et dans laquelle au moins un des modules (143) comprend plusieurs trajets mutuellement perpendiculaires, et autant de courroies d'entraînement à frottement (93, 99, 118) qu'il y a de trajets perpendiculaires, chacune des courroies d'entraînement à frottement étant disposée suivant un circuit fermé à deux brins parallèles (94, 95) défini par deux poulies d'extrémité (88, 94′) à axe vertical, des circuits perpendiculaires étant situés à deux niveaux différents et l'entraînement des multiples courroies d'un module étant assuré à partir d'un moteur électrique unique, des poulies à plusieurs gorges assurant, si besoin est, la transmission du mouvement d'une courroie à une courroie successive.

2. Installation selon la revendication 1, caractérisée en ce que les palettes (23) sont équipées de billes (61, 62, 62′) pour leur déplacement sur au moins un chemin de roulement (65) prévu sur le fond (68) du module (21).

3. Installation selon la revendication 2, caractérisée en ce que les billes (61, 62) sont des billes de manutention.

4. Installation selon la revendication 2, caractérisée en ce que le chemin de roulement (65) est présenté par une barre (67) solidaire du fond (68).

5. Installation selon la revendication 1, dans laquelle, lorsque les circuits perpendiculaires sont successifs, ils comprennent une même poulie (94′, 102) pour leur définition et dans laquelle une palette présente sur sa face inférieure des zones d'entraînement (29, 31, 38, 39) à deux niveaux différents, les zones (29, 31) d'un niveau étant dirigées perpendiculairement aux zones (38, 39) de l'autre niveau.

6. Installation selon la revendication 5, dans laquelle une palette comprend des zones bandulaires marginales (29, 31) sous le plateau (24) de la palette (23), des patins (34, 35) transversaux auxdites zones et présentant des zones bandulaires de frottement (38, 39) perpendiculaires aux premières et, à l'extrémité desdits patins, des plots (56, 57), caractérisée en ce que les billes de manutention (61, 62) sont logées dans les plots (56, 57).

7. Installation selon la revendication 4, caractérisé en ce que, à la fin d'un trajet rectiligne, le chemin de roulement (112) est ascendant pour soulever la palette (23) de manière que sa zone bandulaire (29) pour l'entraînement dans le trajet perpendiculaire suivant soit soulevé au-dessus de la courroie (117) pour son entraînement dans ladite direction, le chemin ascendant se terminant dans une gouttière (116) pour permettre la retombée de la palette (23) sur ladite courroie (117) sous l'effet de son propre poids.

8. Installation selon la revendication 4, caractérisée en ce qu'une barre (123) présentant un chemin de roulement (125) se prolonge par un aileron (122) à l'intersection de deux parcours perpendiculaires pour contribuer au maintien de la palette (23) en coopération avec un patin de celle-ci.

9. Installation selon la revendication 1, caractérisé en ce qu'à un carrefour (196) où une palette (23) peut emprunter l'un ou l'autre de deux parcours perpendiculaires, les circuits des courroies (139, 182) prévus pour l'entraînement dans une première direction longitudinale et dans une seconde direction transversale laissent entre eux un
intervalle pour l'entrée de la palette dans le carrefour.

10. Installation selon la revendication 1 ou la
revendication 5, caractérisée en ce que la courroie (139) pour l'entraînement dans une première
direction longitudinale est à un niveau supérieur à
celui de la courroie (182) pour l'entraînement dans
une seconde direction transversale.

11. Installation selon l'une des revendications 9
et 10, caractérisée en ce que l'intervalle ménagé
entre les courroies (139, 182) est à direction transversale.

12. Installation selon la revendication 11, caractérisée en ce qu'une troisième courroie (157) est
prévue pour réaliser l'entraînement transversal
transitoire au droit de l'intervalle.

13. Installation selon la revendication 12, caractérisée en ce que la troisième courroie (157) est à
un niveau inférieur aux deux premières courroies
(139, 182).

14. Installation selon les revendications 6 et 13,
caractérisée en ce que la palette (23) comprend
des zones bandulaires (338, 339) sur la face inférieure de ses plots (56, 57) pour la coopération
avec la troisième courroie (157).

15. Installation selon l'une des revendications 9
à 14, caractérisée en ce que le carrefour (196)
présente des moyens de butée (202, 203) éclipsables pour interdire la progression d'une palette
(23), soit dans le sens longitudinal, soit dans le
sens transversal.

16. Installation selon la revendication 15, caractérisée en ce qu'au carrefour (196) sont prévus
des moyens pour le soulèvement de la palette et
la retombée des plots (56, 57) sur la troisième
courroie (157).

17. Installation selon l'une des revendications 9
à 16, dans laquelle le carrefour d'entrée (196) est
associé à un module d'assemblage manuel (143).

18. Installation selon la revendication 17, caractérisée en ce que la troisième courroie (157) relie
en outre des poulies (148, 168) à plusieurs gorges
pour l'entraînement des autres courroies (139,
172) du module.

19. Palette porte-pièce, propre à circuler dans
une installation selon l'une quelconque des revendications 1 à 16, à plateau (24), patins transversaux (34, 35) et plots (56, 57) faisant saillie vers le
bas par rapport aux patins (34, 35), aux extrémités
de ceux-ci, la palette comprenant, sur sa face
inférieure, des zones d'entraînement principales
(29, 31, 38, 39) à deux niveaux différents, les zones
(29, 31) d'un niveau étant dirigées perpendiculairement aux zones (38, 39) de l'autre niveau, et les
plots (56, 57) présentant des zones bandulaires
d'entraînement transversal supplémentaire (338,
339) pourvues d'une surface rugueuse et situées à
un troisième niveau inférieur aux deux niveaux
principaux.

20. Palette porte-pièce, selon la revendication
19, caractérisée en ce que la zone bandulaire d'un
patin est constituée par des bandes métalliques
striées (38, 39), localisées aux extrémités du patin (34) et différemment disposées par rapport au
plan longitudinal moyen de la palette (23).

21. Installation selon l'une des revendications 1
à 16, comprenant un module à poste de traitement
automatique, caractérisée en ce que ce module a
une forme générale parallélépipédique et en ce
que sa face antérieure (311, 312, 313, 314) est
fermée et ses faces latérales (281, 282) sont des
joues en forme de C ouvert vers l'arrière.

22. Installation selon la revendication 21, caractérisée en ce que les organes de structure du
module sont rattachées à l'ossature (271) du
poste.

23. Installation selon la revendication 22, caractérisé en ce que le module comprend, en tant
qu'organes de structure, des poutres longitudinales (278, 279, 285, 286) interposées entre les joues
(281, 282).

24. Installation selon la revendication 21, caractérisée en ce que, sur les joues (281, 282), sont
fixés des fers en U transversaux (283) pour l'enfichage du module sur des organes de structure de
l'installation.

25. Installation selon la revendication 23, caractérisée en ce que les poutres longitudinales (278,
279, 285, 286) sont des poutres à rainures prévues
pour la réception de plaques coulissantes (311,
312, 313, 314).

26. Installation selon la revendication 25, caractérisée en ce que les plaques antérieures (311,
312) sont transparentes.

27. Installation selon la revendication 21, caractérisée en ce que la partie supérieure (324) du
module est prévue pour le logement de l'équipement électrique et/ou mécanique et/ou pneumatique.

28. Installation selon la revendication 21, caractérisée en ce que le module comprend, à l'arrière,
un convoyeur (253) pour les palettes.

29. Installation selon la revendication 28, caractérisée en ce que le module comporte un tiroir
(243) à déplacement transversal pour l'introduction d'une palette (23) à partir du convoyeur (253)
dans un guichet (231) que présente le poste.

30. Installation selon la revendication 29, caractérisée en ce que le tiroir (243) comprend des
moyens pour rétablir la continuité du convoyeur
(253) pour le déplacement de palettes circulantes
(23) alors qu'une palette est en position de travail
dans le guichet (231).

**Claims**

1. Installation for the horizontal transport of
workpieces, for ensuring the movement of these
workpieces among stations for assembly and/or
for machining, either manual or automatic, the
installation being constituted by workpiecesupport pallets (23) and by a succession of modules (21, 87, 143) ensuring the continuous transport of the pallets along a course composed of
successive horizontal trajectories which are perpendicular in relation to one another, with the aid
of belts (93, 99, 118) on which the pallets (23) rest:
installation wherein the driving of the pallets (23) by the belts (93, 99, 118) is performed by friction on at least one margin (27) of the pallets carried on one belt-side of the belt, whilst the opposite margin (28) can (if necessary) slide along the guide means (76), and wherein at least one of the modules (143) comprises several trajectories which are mutually perpendicular, and as many friction-drive belts (93, 99, 118) as there are perpendicular trajectories, each of the friction-drive belts being disposed in accordance with a closed circuit with two parallel belt-sides (94, 95) defined by two end-pulleys (88, 94') with vertical axis, perpendicular circuits being situated at two different levels and the drive of the multiple belts of a module being ensured by way of one single electric·motor, pulleys with several grooves ensuring (if necessary) the transmission of the movement from a belt to a belt, successively.

2. Installation according to claim 1, characterised in that the pallets (23) are equipped with ball bearings (61, 62, 62') for their displacement on at least one rolling path (65) provided on the base (68) of the module (21).

3. Installation according to claim 2, characterised in that the ball bearings (61, 62) are ball-bearings of the material-handling type.

4. Installation according to claim 2, characterised in that the rolling path (65) is provided in the form of a bar (67) which is integral with the base (68).

5. Installation according to claim 1, wherein, when the perpendicular circuits are successive, they comprise one and the same pulley (94', 102) for their definition, and wherein a pallet has, on its lower face, driving zones (29, 31, 38, 39) at two different levels, the zones (29, 31) of one level being directed perpendicularly to the zones (38, 39) of the other level.

6. Installation according to claim 5, wherein a pallet comprises marginal bandular zones (29, 31) under the plate (24) of the pallet (23), slide members (34, 35) which are transversal to the said zones and are provided with bandular friction zones (38, 39) perpendicular to the first-mentioned and, at the end of the said slide members, blocks (56, 57), characterised in that the material-handling ball bearings (61, 62) are accomodated in the blocks (56, 57).

7. Installation according to claim 4, characterised in that, at the end of a rectilinear trajectory, the rolling path (112) is an ascending one, for raising the pallet (23) in such a manner that its bandular zone (29), for the drive in the following perpendicular trajectory, is lifted above the belt (117) for its drive in the said direction, the ascending path terminating in a channel (116) for enabling the pallet (23) to drop down again onto the said belt (117) under the action of its own weight.

8. Installation according to claim 4, characterised in that a bar (123) which is provided with a rolling path (125) is prolonged by a flap (122) at the intersection of two perpendicular courses, for contributing to the holding of the pallet (23) in cooperation with a slide member thereof.

9. Installation according to claim 1, characterised in that at an intersection (196) where a pallet (23) can adopt one or the other of two perpendicular courses, the circuits of the belts (139, 182) which·are provided for the drive in a first longitudinal direction and in a second transversal direction leave between themselves an interval for the entry of the pallet into the intersection.

10. Installation according to claim 1 or claim 5, characterised in that the belt (139) for the drive in a first longitudinal direction is at a level higher than that of the belt (182) for the drive in a second transversal direction.

11. Installation according to any one of the claims 9 and 10, characterised in that the inverval arranged between the belts (139, 182) is in the transversal direction.

12. Installation according to claim 11, characterised in that a third belt (157) is provided, for effecting the transitory transversal drive at right angles to the interval.

13. Installation according to claim 12, characterised in that the third belt (157) is at a level lower than that of the first two belts (139, 182).

14. Installation according to claims 6 and 13, characterised in that the pallet (23) comprises bandular zones (338, 339) on the lower face of its blocks (56, 57), for co-operating with the third belt (157).

15. Installation according to any one of the claims 9 to 14, characterised in that the intersection (196) is provided with stop means (202, 203) which are retractable, for purposes of blocking the progress of a pallet (23) either in the longitudinal direction or in the transversal direction.

16. Installation according to claim 15, characterised in that at the intersection (196), means are provided for lifting the pallet and for enabling the blocks (56, 57) to drop down again onto the third belt (157).

17. Installation according to any one of the claims 9 to 16, wherein the entry intersection (196) is associated with a module for manual assembly (143).

18. Installation according to claim 17, characterised in that the third belt (157) furthermore connects pulleys (148, 168) with several grooves, for driving other belts (139, 172) of the module.

19. Workpiece support pallet, adapted to move in an installation according to any one of the claims 1 to 16, with a plate (24), transversal slide members (34, 35), and blocks (56, 57) which project downwardly in relation to the slide members (34, 35), at the ends thereof, the pallet comprising, on its lower face, principal driving zones (29, 31, 38, 39) at two different levels, the zones (29, 31) of one level being directed perpendicularly to the zones (38, 39) of the other level, and the blocks (56, 57) being equipped with supplementary transversal bandular driving zones (338, 339) which are provided with a roughened surface and are situated at a third level which is lower than the two principal levels.

20. Workpiece support pallet according to claim 19, characterised in that the bandular zone of a slide member is constituted by ribbed metallic strips (38, 39) which are located at the ends of the slide member (34) and are disposed differently in relation to the middle longitudinal plane of the pallet (23).

21. Installation according to any one of the claims 1 to 16, comprising a module with an automatic processing station, characterised in that this module is of generally parallelepiped shape, and in that its frontal face (311, 312, 313, 314) is closed, and its lateral faces (281, 282) are cheeks in the shape of a C which is open towards the rear.

22. Installation according to claim 21, characterised in that the structural members of the module are attached to the framework (271) of the station.

23. Installation according to claim 22, characterised in that the module comprises, as structural members, longitudinal beams (278, 279, 285, 286) which are interposed between the cheeks (281, 282).

24. Installation according to claim 21, characterised in that, on the cheeks (281, 282) there are fixed transversal U-shaped iron members (283) for plugging-in the module on the structural members of the installation.

25. Installation according to claim 23, characterised in that the longitudinal beams (278, 279, 285, 286) are beams with grooves which are provided for receiving sliding plates (311, 312, 313, 314).

26. Installation according to claim 25, characterised in that the frontal plates (311, 312) are transparent.

27. Installation according to claim 21, characterised in that the upper part (324) of the module is arranged for purposes of accomodating electrical and/or mechanical and/or pneumatic equipment.

28. Installation according to claim 21, characterised in that the module comprises, at the rear, a conveyor (253) for the pallets.

29. Installation according to claim 28, characterised in that the module comprises a sliding member (243) with transversal displacement, for the introduction of a pallet (23) from the direction of the conveyor (253) into an aperture (231) with which the station is provided.

30. Installation according to claim 29, characterised in that the sliding member (243) comprises means for re-establishing the continuity of the conveyor (253) for the displacement of the moving pallets (23), whilst a pallet is in the working position in the aperture (231).

**Patentansprüche**

1. Anlage zum horizontalen Transport von Teilen zur Sicherung des Umlaufes dieser Teile zwischen manuellen oder automatischen Montage- und/oder Bearbeitungsständen, wobei die Anlage aus die Teile tragenden Paletten (23) sowie einer Folge von Modulen (21, 87, 143) besteht, und mittels Riemen (93, 99, 118), auf denen die Paletten (23) ruhen, der kontinuierliche Transport der Paletten entlang einer aus aufeinander folgenden, horizontalen und zueinander quer verlaufenden Abschnitten ermöglicht wird, und in der Anlage die Mitnahme der Paletten (23) durch die Riemen (93, 99, 118) mittels Reibung eines Riemenstranges an mindestens einem Palettenrand (27) erfolgt, während der gegenüberliegende Rand (28) vorkommendenfalls entlang Führungsmitteln (76) gleitet, und ferner wenigstens einer der Module (143) mehrere normal zueinander verlaufende Abschnitte aufweist, wobei soviele Mitnahmeriemen (93, 99, 118) vorgesehen sind, als es normal zueinander verlaufende Abschnitte gibt, und jeder der Mitnahmeriemen entlang eines geschlossenen Kreislaufes zweier Stränge angeordnet ist, die durch zwei äußere Riemenscheiben (88, 94') mit vertikaler Achse bestimmt sind, ferner die normal zueinander verlaufenden Kreisläufe in zwei verschiedenen Höhen liegen, der Antrieb der Mehrfachriemen eines Moduls durch einen einzigen Elektromotor erfolgt und Riemenscheiben mit mehreren Rillen bei Bedarf die Übertragung der Bewegung eines Riemens auf einen folgenden Riemen sichern.

2. Anlage nach Anspruch 1, dadurch gekennzeichnet, daß die Paletten (23) mit Kugeln (61, 62, 62') zur Verschiebung auf mindestens einer, auf dem Boden (68) des Moduls (21) vorgesehenen Rollbahn (65) des Moduls (21) versehen sind.

3. Anlage nach Anspruch 2, dadurch gekennzeichnet, daß die Kugeln (61, 62) Transportkugeln sind.

4. Anlage nach Anspruch 2, dadurch gekennzeichnet, daß die Rollbahn (65) durch eine mit dem Boden (68) fest verbundene Schiene (67) gebildet ist.

5. Anlage nach Anspruch 1, dadurch gekennzeichnet, daß bei aufeinander folgenden, zueinander normal verlaufenden Kreisläufen diese eine gleiche Riemenschiebe zu ihrer Bestimmung aufweisen und daß eine Palette an ihrer Unterseite Mitnahmezonen (29, 31, 38, 39) in zwei verschiedenen Höhenlagen aufweist, wobei die Zonen (29, 31) der einen Höhenlage quer zu den Zonen (38, 39) der anderen Höhenlage verlaufen.

6. Anlage nach Anspruch 5, bei der eine Palette (23) bandförmige Randzonen (29, 31) unter ihrem Plateau (24) aufweist und quer verlaufende Führungsschuhe (34, 35) die zu ersteren Randzonen senkrecht stehenden bandförmigen Reibungszonen (38, 39) bilden wobei an den Enden der Führungsschuhe Anschläge (56, 57) vorgesehen sind, dadurch gekennzeichnet, daß die Transportrollen (61, 62) in den Anschlägen (56, 57) angeordnet sind.

7. Anlage nach Anspruch 4, dadurch gekennzeichnet, daß am Ende einer geraden Strecke die Rollbahn (112) ansteigend ausgebildet ist, um die Palette (23) zu heben, derart, daß ihre bandförmige Zone (29) für die Mitnahme in der folgenden normal verlaufenden Strecke oberhalb des Riemens (117) zur Mitnahme in dieser Richtung gehoben wird, wobei die ansteigende Bahn in einer Rinne (116) endet, um das Zurückfallen der Palette (23) auf den genannten Riemen (117) unter dem Einfluß ihres Eigengewichtes zu ermöglichen.

8. Anlage nach Anspruch 4, dadurch gekennzeichnet, daß eine eine Rollbahn (125) darstellende Schiene (123) im Schnittpunkt zweier normal zueinander stehender Strecken durch einen Flügel (122) verlängert ist, um im Zusammenwirken mit einem Führungsschuh der Palette (123) zu deren Mitnahme beizutragen.

9. Anlage nach Anspruch 1, dadurch gekennzeichnet, daß an einer Kreuzung (196), an der eine Palette (23) eine von zwei senkrecht zueinander verlaufenden Strecken benützen kann, die Riemenumläufe (139, 182) zur Mitnahme in einer ersten Längsrichtung und in einer zweiten Querrichtung im Abstand voneinander angeordnet sind, um der Palette den Eintritt in die Kreuzung zu ermöglichen.

10. Anlage nach Anspruch 1 oder 5, dadurch gekennzeichnet, daß der Riemen (139) für die Mitnahme in einer ersten Längsrichtung höher angeordnet ist als der Riemen (182) für die Mitnahme in einer zweiten Querrichtung.

11. Anlage nach Anspruch 9 oder 10, dadurch gekennzeichnet, daß der Abstand zwischen den Riemen (139, 182) in Querrichtung liegt.

12. Anlage nach Anspruch 11, dadurch gekennzeichnet, daß ein dritter Riemen (157) vorgesehen ist, um innerhalb des Abstandes eine Mitnahme in Querrichtung zu ermöglichen.

13. Anlage nach Anspruch 12, dadurch gekennzeichnet, daß der dritte Riemen (157) tiefer als die beiden anderen Riemen (139, 182) angeordnet ist.

14. Anlage nach den Ansprüchen 6 und 13, dadurch gekennzeichnet, daß die Palette zur Zusammenarbeit mit dem dritten Riemen (157) an der Unterseite ihrer Anschläge (56, 57) bandförmige Zonen (338, 339) aufweist.

15. Anlage nach einem der Ansprüche 9 bis 14, dadurch gekennzeichnet, daß die Kreuzung (196) verstellbare Anschlagmittel (202, 203) aufweist, um die Weiterbewegung einer Palette (23) entweder in der Längsrichtung oder in der Querrichtung zu sperren.

16. Anlage nach Anspruch 15, dadurch gekennzeichnet, daß an der Kreuzung (196) Mittel zum Heben der Palette und zum Rückfallen der Anschläge (56, 57) auf den dritten Riemen (157) vorgesehen sind.

17. Anlage nach einem der Ansprüche 9 bis 16, in der der Eintritt (196) in die Kreuzung einem Modul (143) für eine manuelle Montage zugeordnet ist.

18. Anlage nach Anspruch 17, dadurch gekennzeichnet, daß der dritte Riemen (157) an Riemenscheiben (148, 168) mit mehreren Rillen zum Antrieb der anderen Riemen (139, 172) des Moduls angeschlossen ist.

19. Palette zum Tragen von Teilen, geeignet zum Umlauf in einer Anlage nach einem der Ansprüche 1 bis 16, mit einem Plateau (24), quer verlaufenden Führungsschuhen (34, 35) und an den Enden derselben in bezug auf diese nach unten vorspringende Anschläge (56, 57), an der Unterseite der Palette vorgesehene Hauptmitnahmezonen (29, 31, 38, 39) in zwei verschiedenen Höhenlagen, wobei die Zonen (29, 31) der einen Höhenlage senkrecht zu den Zonen (38, 39) der anderen Höhenlage verlaufen, wobei ferner die Anschläge (56, 57) quer verlaufende zusätzliche bandförmige Mitnahmezonen (338, 339) aufweisen, die in einer dritten Höhenlage unterhalb der beiden Haupthöhenlagen angeordnet sind.

20. Palette nach Anspruch 19, dadurch gekennzeichnet, daß die bandförmige Zone eines Führungsschuhs durch metallische Streifen (38, 39) gebildet ist, die an den Enden des Schuhs (34) und im bezug auf die Längsmittelebene der Palette (23) verschieden angeordnet sind.

21. Anlage nach einem der Ansprüche 1 bis 16, enthaltend einen Modul mit einem automatischen Bearbeitungsstand, dadurch gekennzeichnet, daß dieser Modul im wesentlichen eine parallelepipedische Form aufweist und daß seine vordere Fläche (311, 312, 313, 314) geschlossen ist und seine seitlichen Flächen (281, 282) Wangen in Form eines nach hinten offenen C sind.

22. Anlage nach Anspruch 21, dadurch gekennzeichnet, daß die Strukturorgane des Moduls durch ein Gestell des Standes verknüpft sind.

23. Anlage nach Anspruch 22, dadurch gekennzeichnet, daß der Modul als Strukturorgane zwischen die Wangen (281, 282) eingesetzte Längsträger (278, 279, 285, 286) aufweist.

24. Anlage nach Anspruch 21, dadurch gekennzeichnet, daß an den Wangen (281, 282) quer verlaufende U-Profile (283) zum Stecken des Moduls auf die Strukturorgane der Anlage befestigt sind.

25. Anlage nach Anspruch 23, dadurch gekennzeichnet, daß die Längsträger (278, 279, 285, 286) zur Aufnahme von schiebbaren Platten (311, 312, 313, 314) genutet sind.

26. Anlage nach Anspruch 25, dadurch gekennzeichnet, daß die vorderen Platten (311, 312) transparent sind.

27. Anlage nach Anspruch 21, dadurch gekennzeichnet, daß der obere Teil (324) des Moduls für die Anbringung einer elektrischen und/oder mechanischen und/oder pneumatischen Anordnung vorgesehen ist.

28. Anlage nach Anspruch 21, dadurch gekennzeichnet, daß der Modul hinten einen Förderer (253) für die Paletten aufweist.

29. Anlage nach Anspruch 28, dadurch gekennzeichnet, daß der Modul einen quer beweglichen Schieber (243) zur Einführung einer Palette (23) vom Förderer (253) in einen den Stand darstellenden Schalter (231) aufweist.

30. Anlage nach Anspruch 29, dadurch gekennzeichnet, daß der Schieber (243) Mittel besitzt, um die Kontinuität des Förderers (253) für die Bewegung der umlaufenden Paletten (23), während eine Palette in Arbeitsstellung im Schalter (203, 31) ist, aufrecht zu erhalten.

EP 0 088 680 B1

FIG.1
FIG.2
FIG.3
FIG.4
FIG.5
FIG.6

13

FIG.8

FIG.9

FIG.10

FIG.11

FIG.7

FIG.12

FIG.13

FIG.15

FIG.14